# EUROPEAN PATENT APPLICATION

(11) **EP 1 886 786 A2**
(43) Date of publication of application: **13.02.2008**
(21) Application number: 07112099.2
(22) Date of filing: 09.07.2007
(51) Int. Cl.: B29C 44/06

(54) **Method for manufacturing shells for electric products**

(30) Priority: 27.07.2006 US 494009
(71) Applicant: Wang, Swei Mu, Situn, Taichung 40761 (TW)
(72) Inventor: Wang, Swei Mu, Situn, Taichung 40761 (TW)
(74) Representative: Beck, Michael Rudolf

(57) **Abstract**

A method is used for manufacturing outer housings or shells (10) for electric products (1, 2, 3) and includes a base layer (15) and a cover layer (16), an intermediate pattern layer (17) sandwiched between the base layer (15) and the cover layer (16), and the intermediate pattern layer (17) includes a pattern (18), the cover layer (16) is made of transparent materials for allowing the pattern (18) on the intermediate pattern layer (17) to be seen through the cover layer (16), and a cushioning layer (20) is attached to the base layer (15) to form a casing (11, 12) of a shell (10). An anti-static electricity material or natural fibers or wood chips or recycled or waste plastic materials or particles or electric conductive materials may be engaged into the cushioning layer (20).

## Description

The invention relates to a method for making cushioning outer housings or shells of electric products.

Typical electrical products, such as portable or mobile phones, personal digital assistants, electric game cards, electric mice, monitors, electric digital panels, portable computers, personal computers comprise an outer shell made of plastic materials which may not absorb or dissipate shocks and vibrations.

The invention aims at providing a method for cushioning outer housings or shells and for protecting electric products.

The invention provides a method for manufacturing outer shells for electric products according to claim 1. Advantageous embodiments are laid down in further claims.
FIG. 1 is a perspective view of a mobile phone to be made with a method of the invention;
FIG. 2 is a partial perspective view of the mobile phone;
FIG. 3 is an end view of the portable or mobile phone;
FIG. 4 is a perspective view of a housing of the phone;
FIG. 5 is a partial exploded view of the mobile phone;
FIGS. 6, 7, 8, 9, 10, 11 are partial cross sectional views; and
FIGS. 12, 13, 14 are perspective views of the products made with the outer housing or shell of the invention.

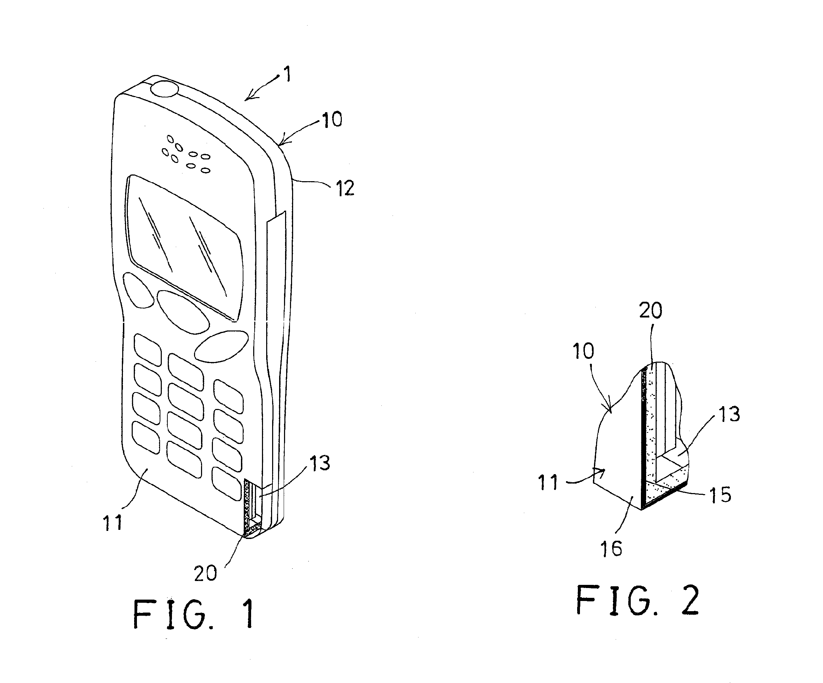

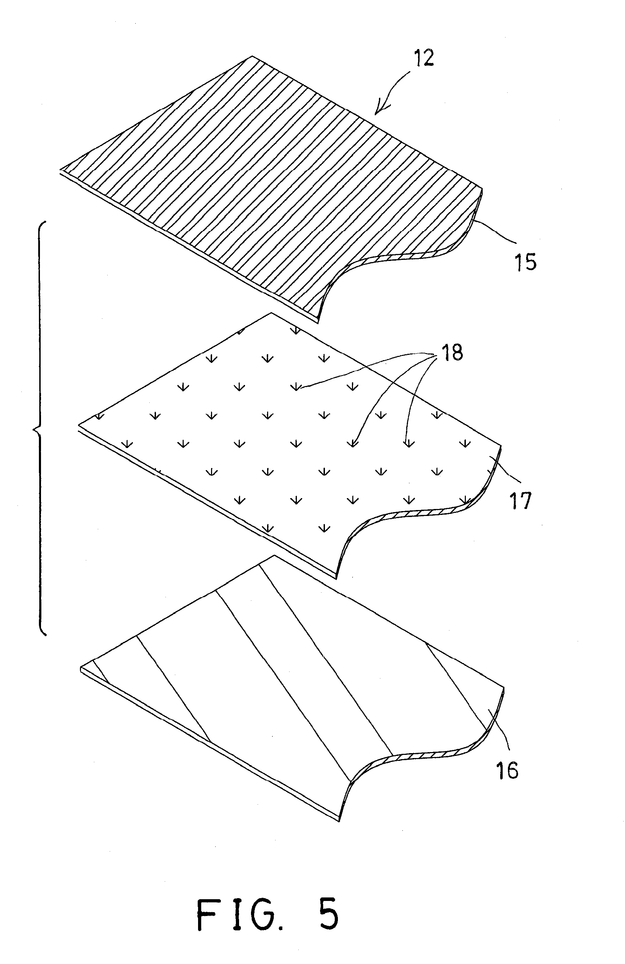

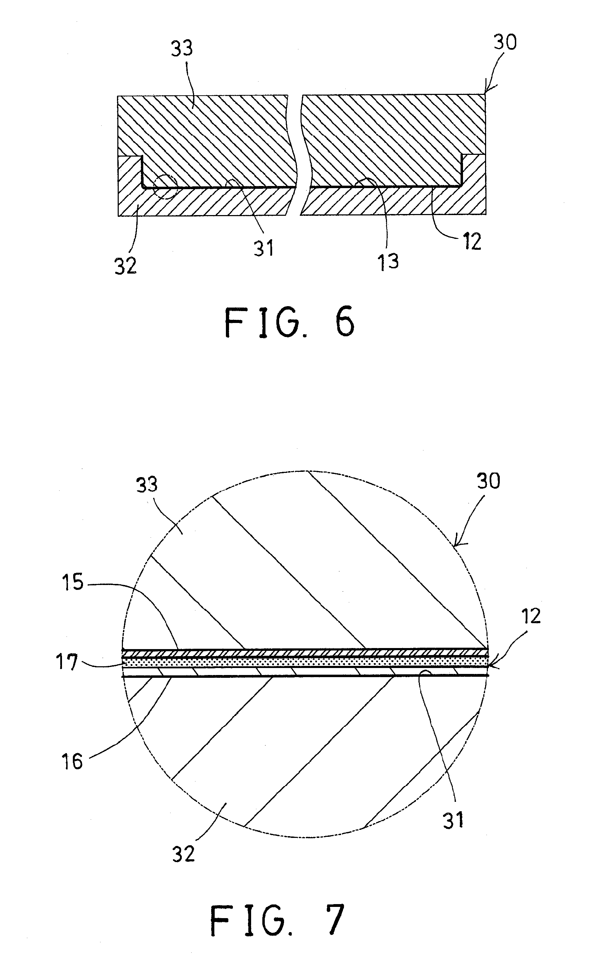

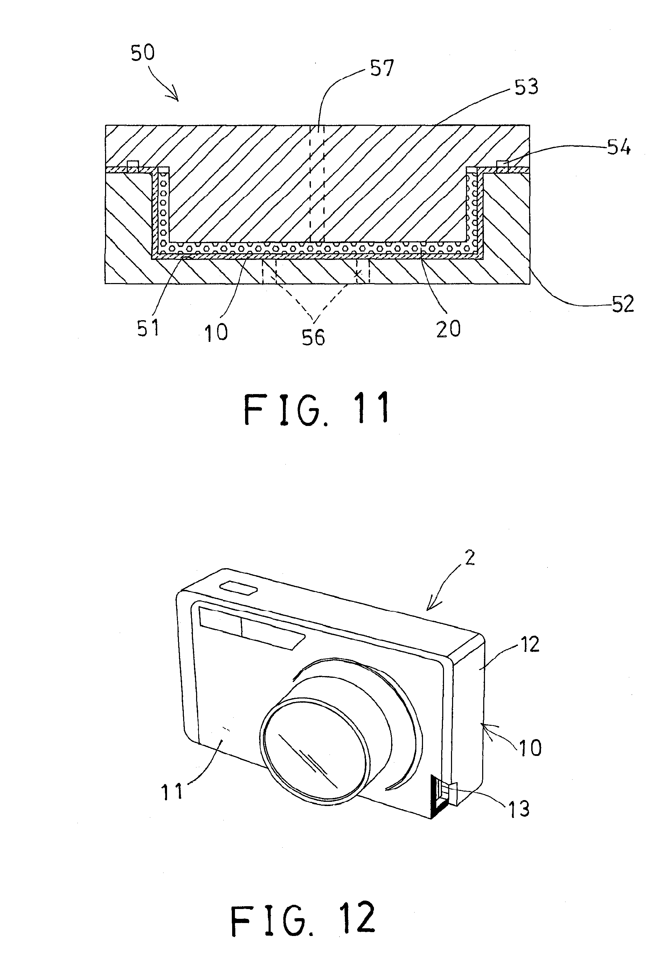

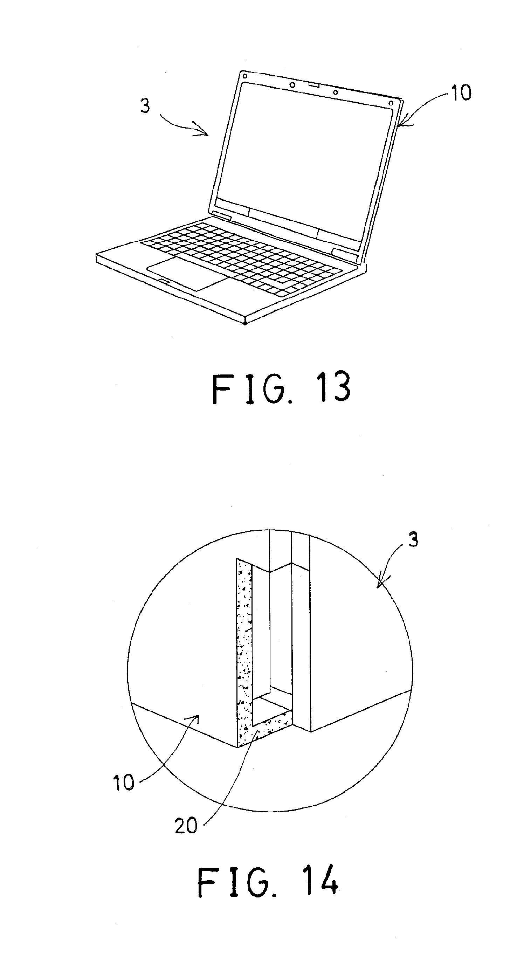

Referring to FIGS. 1 and 2, a method is for making an outer shell 10 of electric products 1, such as portable or mobile phone 1 (FIGS. 1-3), camera 2 (FIG. 12), portable computers 3 (FIGS. 13-14) or other electric products. The shell 10 comprises one or more casings 11, 12 to be secured together with such as fasteners or latches, adhesive materials, or by welding processes, and each having a chamber 13 for receiving various electric parts or elements. The casings 11, 12 each includes a base layer 15 (FIGS. 5-7) made of plastic or synthetic materials with a mold device 30 (FIGS. 6-11), and each having various outer colors or decorative patterns.

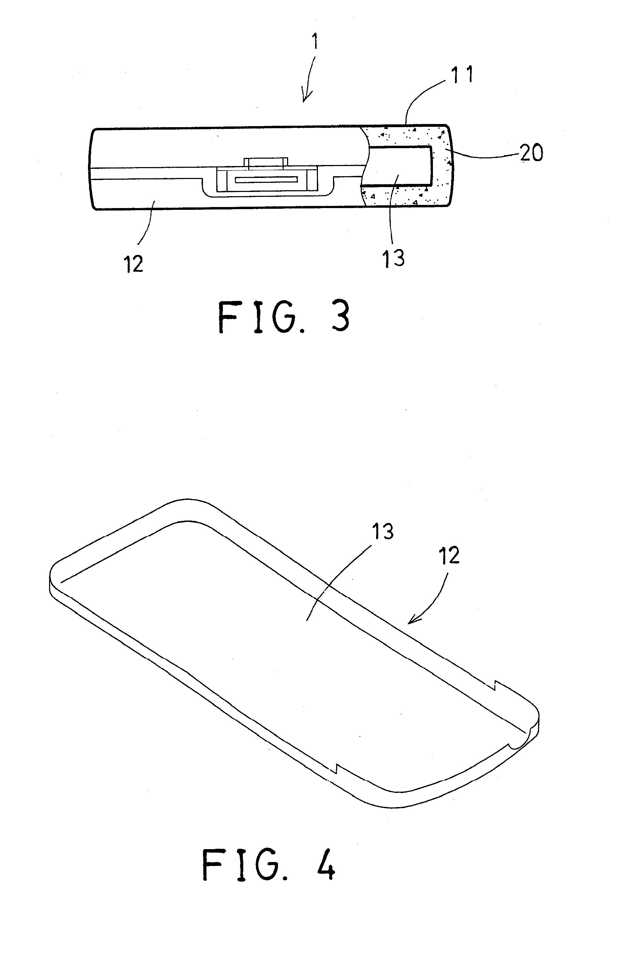

The casings 11, 12 each include an anti-corrosive and/or anti-abrasive cover layer 16 attached to the base layer 15 (FIGS. 5, 7), and made of transparent or semi-transparent materials for allowing the colors or decorative patterns on the base layer 15 to be seen, and an intermediate pattern film or membrane or layer 17 having colors or decorative patterns 18 (FIG. 5) and sandwiched between the base layer 15 and the cover layer 16 and to be seen through the transparent cover layer 16. The cover layer 16 and the pattern layer 17 and the base layer 15 may be engaged into a mold cavity 31 of the mold device 30 (FIGS. 6, 7) and hot-pressed and secured by lower and upper mold pieces 32, 33 to form the casings 11, 12 (FIG. 4).

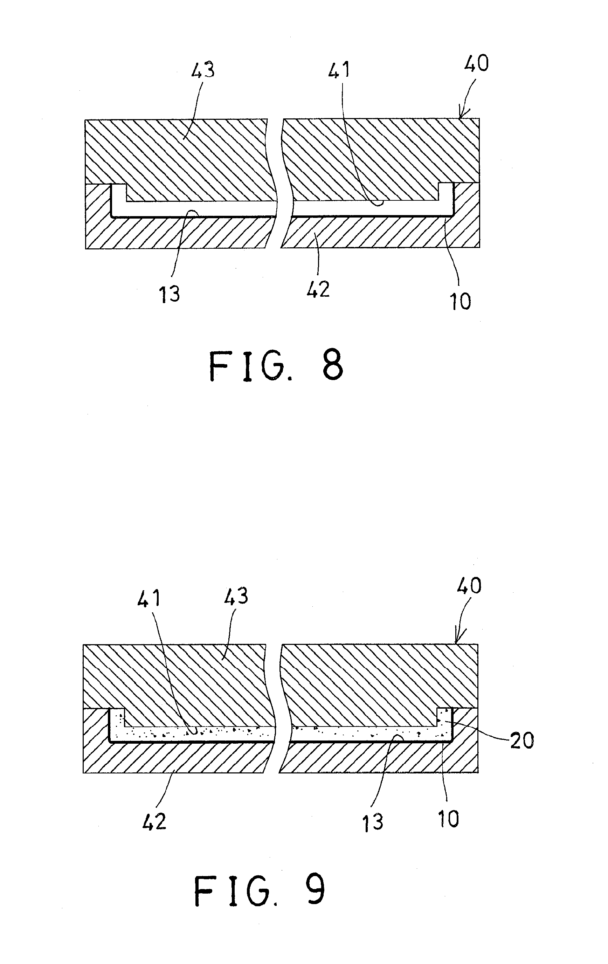

The molded casings 11, 12 may then be engaged into another mold device 40 (FIGS. 8, 9) having a mold cavity 41 formed between lower and upper mold pieces 42, 43. A foamable or synthetic or cushioning material is then filled into the mold cavity 41 to form a cushioning layer 20 in either or both of the casings 11, 12 for absorbing shocks and vibrations that may be applied to the casings 11, 12. A trimming or finishing process may remove the burrs of the casings 11, 12. Each electric product 1-3 (FIGS. 1-3 and 12-14) may include two or more shells 10 of different colors or patterns for allowing the shells 10 to be changed from each other.

An additional leather or cloth layer may be attached to either the inner or the outer portion of the casings 11, 12 for forming a different outer peripheral surface. Wood chips or natural fibers or other recycled cut off materials or waste plastic materials or particles, and/or anti-static electricity or electric conductive materials may be engaged into the material for forming the cushioning layer 20 of the casings 11, 12.

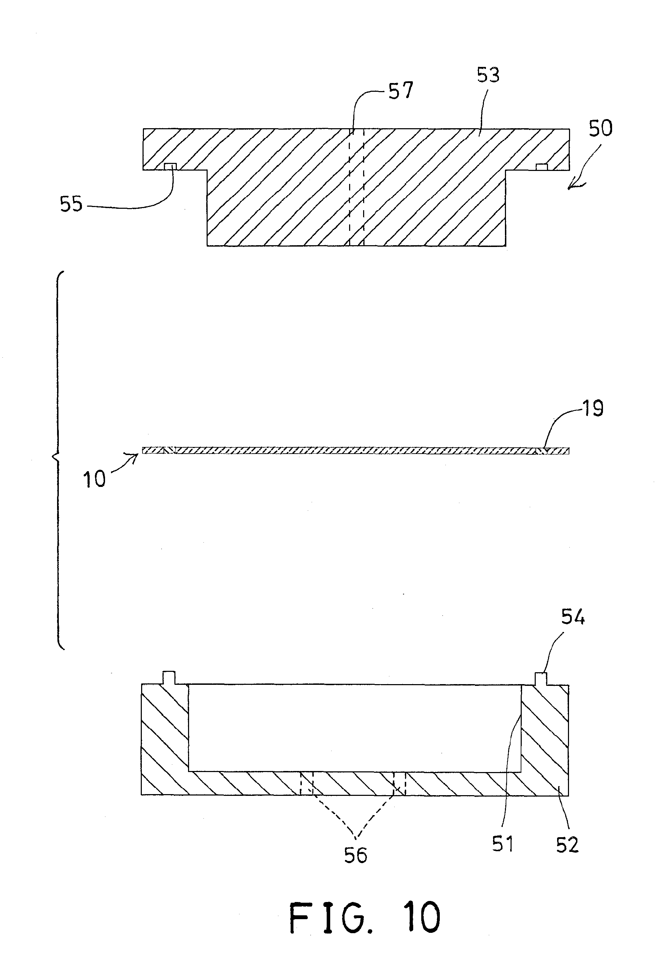

Alternatively, the layers 15, 16, 17 may be directly engaged into a mold cavity 51 of a mold device 50 (FIGS. 10-11) that is formed between a lower and an upper mold pieces 52, 53, and vacuumed to engage with an inner surface of one of the mold pieces 52, the mold piece 52 may include one or more projections 54 for engaging into the depressions 55 of the mold piece 53. One of the mold pieces 52 may include one or more ports 56 for vacuuming and for drawing the layers 15,16, 17 to engage with one of the mold pieces 52, and for filling a material into the mold cavity 51 the mold device 50 via a passage 57 of the upper mold piece 53. The layers 15, 16, 17 may include one or more orifices 19 for receiving the projections 54.

In operation, as shown in FIGS. 1-3 and 12-14, the method may make the casings 11, 12 of the shell 10 for the various electric products 1, 2, 3, and for providing the foamable or resilient cushioning layer 20 to cushion the electric parts or elements received in the electric products 1, 2, 3. In addition, the colors or patterns 18 of the intermediate pattern layer 17 may be sandwiched and protected between the base layer 15 and the cover layer 16 and may prevent the colors or patterns 18 from being dispersed.

## Claims

1. A method for manufacturing outer shells (10) for electric products (1, 2, 3), the method comprising:
providing a base layer (15) and a cover layer (16),
sandwiching an intermediate pattern layer (17) between the base layer (15) and the cover layer (16), the intermediate pattern layer (17) including a pattern (18) protected between the base layer (15) and the cover layer (16), the cover layer (16) being made of transparent materials for allowing the pattern (18) on the intermediate pattern layer (17) to be seen through the cover layer (16), and
attaching a cushioning layer (20) to the base layer (15) to form a casing (11, 12) of a shell (10).

2. The method as claimed in claim 1 further comprising introducing anti-static electricity material into the cushioning layer (20).

3. The method as claimed in claim 1 further comprising introducing natural fibers into the cushioning layer (20).

4. The method as claimed in claim 1 further comprising introducing electric conductive material into the cushioning layer (20).

5. The method as claimed in claim 1 further comprising removing burrs from the casing (11, 12) to form a smooth outer peripheral surface.
